# FASCICULE DE BREVET EUROPEEN

(11) **EP 0 871 846 B1**
(45) Date de publication et mention de la délivrance du brevet: **13.09.2000**
(21) Numéro de dépôt: 97900226.8
(22) Date de dépôt: 02.01.1997
(51) Int. Cl.: G01C 21/20, G09B 29/10, G08G 1/0969

(54) **EQUIPEMENT INFORMATIQUE DU TYPE "MULTIMEDIA" POUR LA DIFFUSION AUTOMATIQUE D'ANIMATIONS DU TYPE "MULTIMEDIA"**
MULTIMEDIAINFORMATIONSSYSTEM FÜR AUTOMATISCHE ÜBERTRAGUNG VON MULTIMEDIADATEN
MULTIMEDIA COMPUTER EQUIPMENT FOR AUTOMATIC TRANSMISSION OF MULTIMEDIA ENTERTAINMENT PROGRAMMES

(30) Priorité: 02.01.1996 FR 9600106
(43) Date de publication de la demande: 21.10.1998
(73) Titulaire: Integral Media S.A., 90006 Belfort Cedex (FR)
(72) Inventeur: PEREIRA, Eddy, F-38800 Pont-de-Claix (FR); GAUDARD, Nicolas, F-14200 Hérouville-Saint-Clair (FR); PIOT, Francis, F-90300 Offemont (FR)
(74) Mandataire: Nithardt, Roland
(86) Numéro de dépôt international: FR9700008
(87) Numéro de publication internationale: WO9724581

(56) Documents cités:
- EP-A- 0 672 890
- WO-A-93/20546
- PATENT ABSTRACTS OF JAPAN vol. 95, no. 008 & JP 07 225897 A (CSK CORP), 22 Août 1995, cité dans la demande

## Description

La présente invention concerne un équipement informatique du type "multimédia" pour la diffusion automatique d'animations "multimédia" en fonction d'une position géographique et/ou d'une heure définie et/ou d'une date fixée à bord d'un véhicule, par exemple pour la diffusion d'animations "multimédia" touristiques dans le cadre d'un voyage effectué à bord de ce véhicule, cet équipement comportant au moins une station informatique embarquée installée dans ledit véhicule, ladite station comportant au moins des moyens de stockage des animations "multimédia", au moins une unité de gestion de ces animations "multimédia", au moins une unité de diffusion desdites animations "multimédia", au moins des moyens de localisation automatique du véhicule, ces moyens comportant un récepteur du type GPS embarqué dans ledit véhicule et agencé pour délivrer en continu des données géographiques relatives à la position du véhicule et/ou au moins des moyens de détection horaire comportant une horloge et agencés pour délivrer en continu des données horaires, ces données géographiques et/ou horaires étant agencées pour communiquer avec l'unité de gestion de manière à diffuser les animations "multimédia" appropriées en fonction de la position géographique dudit véhicule et/ou en fonction de l'heure et/ou de la date, l'unité de diffusion des animations étant couplée à au moins un écran de télévision et à au moins un haut-parleur installés dans ledit véhicule.

Lors de déplacements effectués au moyen d'un véhicule tel qu'une voiture, un autocar, un bateau, etc., et notamment lors de voyages touristiques, les passagers ou voyageurs ne reçoivent pas souvent les informations adéquates au bon moment et les informations qu'ils reçoivent ne leur conviennent pas forcément. Prenons le cas très représentatif des voyages effectués en autocar. Rares sont les agences de voyages qui disposent d'un guide commentant les régions, villes ou sites traversés pendant toute la durée du trajet et s'adaptant aux types de voyageurs, à leur langue, à leur âge et à leurs motivations. Même s'il a l'avantage de répondre aux questions et de rendre les relations humaines plus conviviales, le guide représente une lourde charge financière pour l'agence de voyages et ses compétences sont forcément limitées. De plus, il ne peut que commenter oralement les villes ou les monuments sans pouvoir les illustrer.

D'autre part, les autocars sont habituellement équipés d'un magnétoscope utilisé pour la projection d'un film distrayant et d'une radio utilisée comme élément d'ambiance. Si le magnétoscope est utilisé pour visualiser des reportages sur les sites traversés, il demande l'intervention du conducteur pour sa mise en route. La cassette n'est pas nécessairement activée au moment opportun. En outre, le choix des cassettes existant pour chaque région est très limité, de même que le choix des langues disponibles et des contenus. De plus, cette solution n'est pas directement interactive avec l'agence de voyages et avec le lieu de passage de l'autocar.

Il existe, par ailleurs, des systèmes informatiques embarqués qui sont généralement des ordinateurs portables équipés de cartes d'extension pour permettre une liaison par modem sur le réseau téléphonique et qui sont utilisés notamment comme outils de Bureautique ou de gestion délocalisée ou d'acquisition de données. Les systèmes informatiques dotés d'un système de positionnement global, couramment appelé GPS, sont généralement utilisés dans le cadre des prévisions de trafic ou de radioguidages.

La publication européenne EP-A-0 672 890 décrit une station informatique embarquée à bord d'un bus, la station étant équipée d'un système de localisation du type GPS. Cette station comporte des moyens de mémorisation d'informations, des moyens de diffusion de ces informations et des moyens de déclenchement de la diffusion des informations, ces moyens étant manuels ou automatiques en fonction des données du GPS. Il n'existe aucun moyen permettant de paramétrer un voyage et de sélectionner le type d'informations à diffuser en fonction du public ou d'un thème. Seule la position géographique donnée par le GPS est prise en compte dans le mode automatique.

La publication japonaise JP-A-07 225 897 décrit un dispositif de communication entre une station informatique fixe et une station informatique mobile embarquée dans un véhicule. Les deux stations sont constamment en communication pour assurer la transmission des informations à diffuser de la station fixe vers la station mobile en fonction de la position du véhicule détectée par un système de localisation du type GPS. La station mobile n'est pas conçue pour fonctionner de manière autonome. De plus, les moyens de transmission des informations par ondes radio ne permettent pas de diffuser tous les types d'information tels que des animations vidéo, à cause notamment de la vitesse de transmission limitée. Dans ce dispositif, il n'y a pas non plus de moyens de paramétrage du voyage et de sélection des informations à diffuser.

Le but de l'invention est d'apporter une solution nouvelle et conviviale aux professionnels du tourisme et du transport ainsi qu'aux voyageurs pour rendre les déplacements plus intéressants et attractifs, en proposant un équipement informatique du type "multimédia" interactif avec ces professionnels et avec l'itinéraire emprunté par le véhicule dans l'objectif de diffuser automatiquement, sans intervention du conducteur, des animations du type "multimédia" abordant les thèmes touristiques, culturels, économiques, géographiques, historiques et d'autres encore sur une ville, un site, un monument, une région, une population, etc. en fonction de la position géographique réelle où se trouve le véhicule et/ou d'une heure et/ou d'une date. Les animations "multimédia" diffusées pourront être aisément ciblées en fonction des souhaits et intérêts des touristes, de leur tranche d'âge et de leur langue.

On entend par animations "multimédia", des animations intégrant quatre types de données : du texte, du son, des images et des données informatiques. Les animations obtenues sont par conséquent graphiques, sonores, sous forme de films vidéo au format numérique ou d'animations virtuelles, en deux ou trois dimensions. Le format multimédia permet d'accéder, à la demande, aux quatre types de données mentionnés ci-dessus, de façon interactive, c'est-à-dire en les intégrant soit individuellement, soit simultanément. En les intégrant simultanément, toutes les combinaisons des quatre types de données sont envisageables.

Un autre but de l'invention prévoit que l'équipement proposé permet aux professionnels du tourisme de réaliser et diffuser des messages personnalisés pour promouvoir leurs prestations, les futurs voyages, de même que des messages de bienvenue et des messages relatifs au programme de la journée, aux menus gastronomiques prévus, etc. L'équipement proposé permet également de paramétrer le voyage directement à l'agence en choisissant les animations "multimédia" et les messages personnalisés à diffuser et offrira la possibilité de visualiser sur place l'itinéraire, les sites traversés, etc.

Ces buts sont atteints par un équipement tel que défini en préambule, caractérisé en ce que ladite station embarquée comporte des moyens de stockage des paramètres du voyage différents des moyens de stockage des animations "multimédia" et contenant des informations sur l'itinéraire du voyage prévu et sur les intérêts des types de voyageurs attendus, ces moyens de stockage des paramètres du voyage étant préparés dans une station informatique fixe, ladite station embarquée comportant également une unité de gestion des paramètres du voyage qui communique avec l'unité de gestion des animations "multimédia" de manière à générer l'envoi desdites animations vers l'unité de diffusion des animations en fonction en plus des paramètres du voyage.

La station embarquée comporte avantageusement une unité mémoire dans laquelle sont chargés la base de données, les animations et les paramètres du voyage à partir des moyens de stockage correspondants.

Dans une forme de réalisation préférée de l'invention, l'équipement comporte une station informatique fixe comportant au moins des moyens de stockage des animations "multimédia", au moins une unité de sélection de ces animations "multimédia" et au moins une unité de paramétrage dudit voyage, et en ce qu'il comporte des moyens de transmission de ces données à la station informatique embarquée.

De préférence, les stations informatiques fixe et embarquée comportent un ordinateur du type "multimédia" pourvu au moins d'un lecteur optique et les moyens de stockage des animations "multimédia" (150) comportent au moins un CD ROM (151) contenant au moins une base de données "multimédia" correspondant aux animations à diffuser.

D'une manière avantageuse, l'unité de sélection desdites animations "multimédia" est agencée pour pouvoir sélectionner les animations à diffuser dans les moyens de stockage de ces animations "multimédia" en correspondance à un itinéraire de voyage choisi et en fonction du public et/ou d'un thème.

De même, l'unité de paramétrage dudit voyage est agencée pour pouvoir définir les paramètres du voyage, ces paramètres comportant au moins un itinéraire associé aux animations "multimédia" sélectionnées dans l'unité de sélection et des données horaires.

Dans la forme de réalisation préférée, la station informatique fixe comporte une unité de création de messages personnalisés, ces messages personnalisés étant associés à l'unité de paramétrage et étant transmis à la station informatique embarquée par lesdits moyens de transmission, la station informatique embarquée comportant une unité de gestion de ces messages personnalisés.

De préférence, l'unité de gestion des messages personnalisés est agencée pour générer l'envoi des messages personnalisés vers l'unité de diffusion des animations en fonction des données géographiques et/ou horaires et en fonction des paramètres du voyage.

La station informatique fixe peut comporter au moins une unité de test de voyage agencée pour visualiser les paramètres du voyage sélectionné et visualiser les animations correspondantes.

La station informatique fixe peut également comporter des bibliothèques agencées pour stocker respectivement des itinéraires créés par l'unité de sélection des animations, des voyages créés par l'unité de paramétrage et des messages personnalisés créés par l'unité de création des messages.

D'une manière avantageuse, l'unité de gestion des animations et l'unité de gestion des messages personnalisés sont agencées pour rechercher les animations et/ou les messages à diffuser en fonction d'un ordre de priorité défini dans les paramètres du voyage.

L'unité de gestion des animations peut être agencée pour générer l'envoi d'une animation d'attente, si les données géographiques fournies par le récepteur du type GPS sont inchangées pendant un laps de temps défini dans les paramètres du voyage.

Les moyens de transmission comportent avantageusement une disquette, et les stations informatiques fixe et embarquée comportent un lecteur de disquettes.

Ces moyens de transmission peuvent comporter un émetteur radio et dans ce cas la station informatique embarquée comporte un récepteur radio. Ou encore, ces moyens de transmission peuvent comporter un modem téléphonique et dans ce cas la station informatique embarquée comporte un modem équivalent.

La présente invention et ses avantages apparaîtront mieux dans la description suivante d'un exemple de réalisation non limitatif, en référence aux dessins annexés, dans lesquels :
- la figure 1 représente un équipement complet selon l'invention utilisé pour un voyage touristique en autocar,
- la figure 2 représente un schéma synoptique d'une station informatique fixe faisant partie de l'équipement illustré par la figure 1,
- la figure 3 représente un schéma synoptique d'une station informatique embarquée faisant partie de l'équipement illustré par la figure 1,
- la figure 4 représente un schéma synoptique des principaux moyens mis en oeuvre dans la station informatique embarquée, et
- la figure 5 représente un exemple de découpage des zones géographiques actives associées à des animations "multimédia".

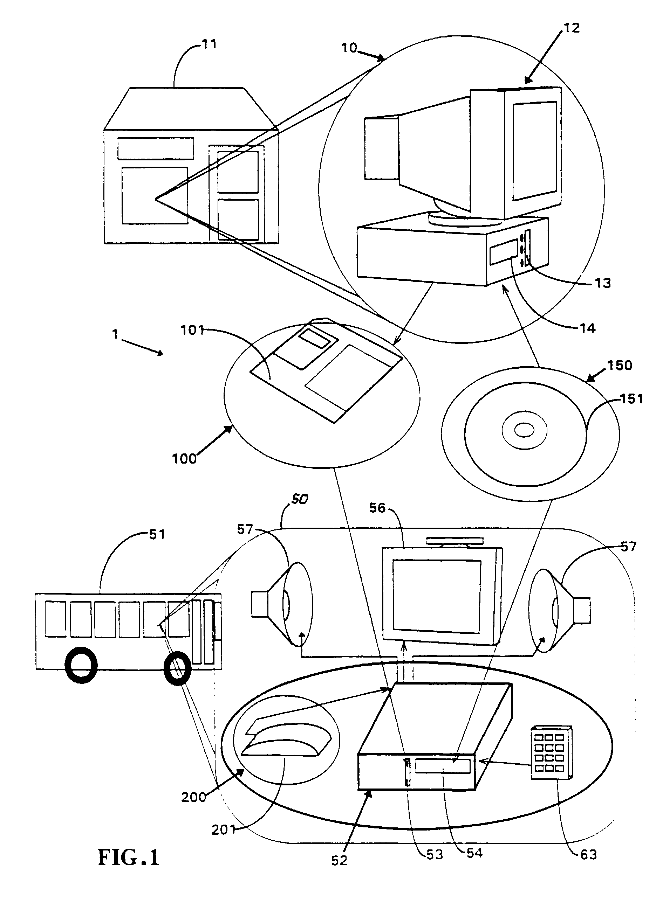

En référence à la figure 1, l'équipement complet 1, dénommé dans ce cas précis d'application "MEDIABUS" (marque déposée), et correspondant à une variante préférée selon l'invention comporte une station informatique fixe 10 installée par exemple dans une agence de voyage 11, une station informatique embarquée 50 installée par exemple à l'intérieur d'un autocar de tourisme 51, des moyens de transmission de données 100 correspondant à des informations relatives à un voyage, des moyens de stockage d'animations "multimédia" à diffuser 150 et des moyens de localisation 200 du véhicule 51 utilisant un système de positionnement global appelé récepteur GPS 201 prévu dans ledit véhicule 51.

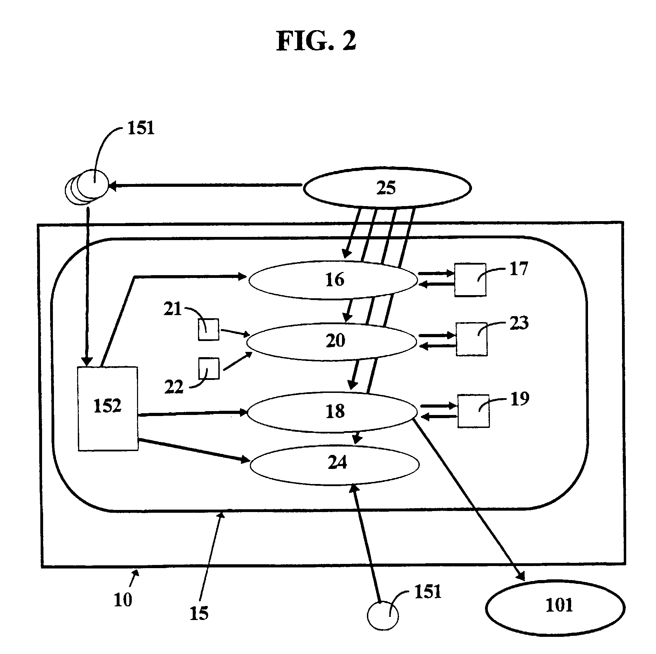

En référence aux figures 1 et 2, la station informatique fixe 10 comporte un ordinateur 12 du type "multimédia" équipé d'un lecteur de disquettes 13 et d'un lecteur optique de CD ROM 14 (CD ROM = disque compact à lecture seule). Cette station est agencée pour permettre la création et la définition d'un voyage par le personnel 25 de l'agence en stockant des informations relatives à ce voyage sous une forme numérique sur des supports tels que des disquettes 101, des CD ROM à lecture optique appelés "CD ROM", etc., pour pouvoir les transmettre à la station informatique embarquée 50 par les moyens de transmission de données 100. Ces informations concernent par exemple l'itinéraire du voyage, les villes et sites traversés, les animations "multimédia" à diffuser au cours de ce voyage relatifs notamment à des informations touristiques de natures diverses : géographique, historique, économique, sociologique, gastronomique, etc., les messages personnalisés et les paramètres du voyage. Ces animations "multimédia" sont sélectionnées dans les moyens de stockage d'animations "multimédia" à diffuser 150 constitués d'au moins un disque compact à lecture optique 151 appelé "CD ROM" et qui contient au moins une base de données "multimédia".

Dans le but tel que défini ci-dessus, l'ordinateur 12 de la station informatique fixe 10 est équipé d'un module spécifique appelé "générateur de voyage" 15 qui comporte au moins une unité de sélection 16 desdites animations "multimédia" en fonction d'un itinéraire de voyage défini. Chaque itinéraire défini peut être mémorisé dans une bibliothèque d'itinéraires 17. Ce générateur de voyage 15 comporte également une unité de création de messages personnalisés 20, pour composer par exemple des messages de bienvenue, le programme de la journée, les menus, mais aussi des messages publicitaires de l'agence de voyage 11, de la société d'autocars concernant leurs prestations, des commerçants locaux pour présenter des produits régionaux, des messages promotionnels pour les voyages à venir, la présentation du Conseil Général, etc. Ces messages personnalisés peuvent être illustrés et agrémentés par une image ou une séquence vidéo sélectionnée dans une bibliothèque d'images 21 et/ou par un logo sélectionné dans une bibliothèque de logos 22. Ils peuvent être ensuite mémorisés dans une bibliothèque de messages personnalisés 23. Bien évidemment, d'autres bibliothèques de données peuvent être prévues en fonction de l'application spécifique de l'invention. Le générateur de voyage 15 comporte aussi au moins une unité de paramétrage 18 dudit voyage qui permet de choisir un itinéraire avec les points de départ et d'arrivée, les messages personnalisés et toutes les autres données relatives à ce voyage. Chaque voyage paramétré peut être mémorisé dans une bibliothèque de voyages 19. Le générateur de voyage 15 comporte en plus une unité de test 24 permettant de tester le contenu d'un voyage sélectionné en visualisant ses paramètres, son itinéraire, les sites et villes traversés, les animations "multimédia" choisies dans la base de données "multimédia" et les messages personnalisés. Le voyage sélectionné est ensuite copié sur la disquette 101 appelée disquette voyage, qui est utilisée pour transmettre le contenu dudit voyage à la station informatique embarquée 50.

Ces moyens de transmission de données 100 peuvent bien entendu être remplacés par une transmission radio en utilisant un récepteur et un émetteur radio ou par une transmission téléphonique en utilisant un modem. Dans ces deux cas, la diffusion d'informations peut être établie dans les deux sens, c'est-à-dire aussi de la station embarquée 50 vers la station fixe 10 pour transmettre par exemple des messages de pannes ou autres.

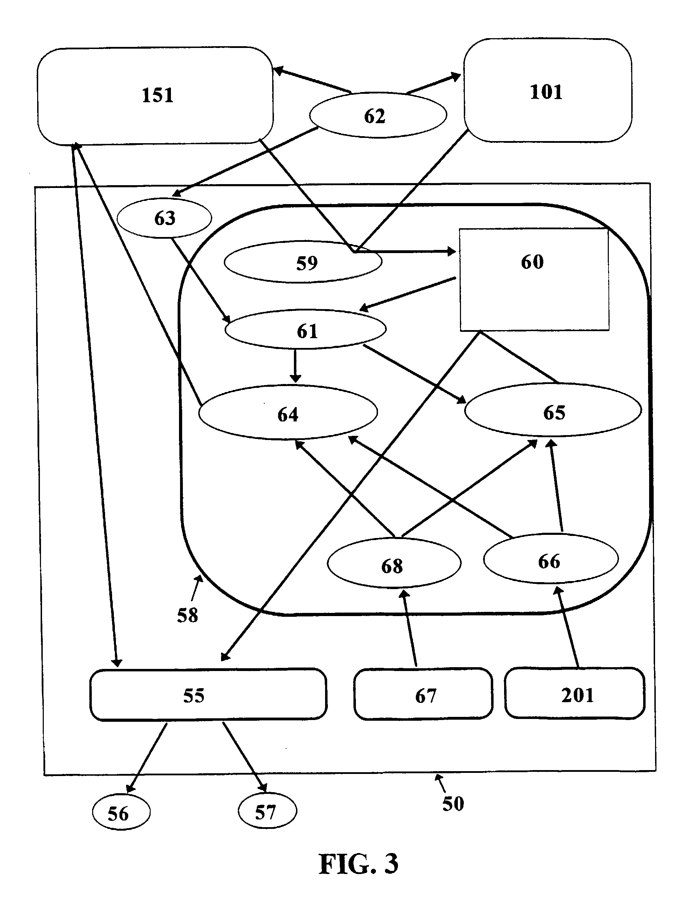

En référence aux figures 1 et 3, la station informatique embarquée 50 comporte un ordinateur 52 du type "multimédia" pourvu également d'un lecteur de disquettes 53 et d'un lecteur optique de CD ROM 54. Cette station embarquée 50 est chargée par la disquette voyage 101 et par au moins un CD ROM 151 contenant au moins une base de données "multimédia" correspondant à la disquette voyage 101. Elle est agencée pour diffuser lesdites animations "multimédia" par au moins une unité de diffusion des animations 55, couplé à au moins un écran de télévision 56 et à au moins un haut-parleur 57 installés dans ledit véhicule 51. La diffusion de ces animations "multimédia" est étroitement liée à la position géographique de véhicule 51 par rapport à un itinéraire choisi et/ou à une heure précise et/ou à une date définie. Dans cet objectif, cette station embarquée 50 comporte un module appelé "gestionnaire de voyage" 58 qui comporte au moins une unité de mise en route 59 pour charger dans une unité mémoire 60 le contenu de la disquette 101 et du CD ROM 151. Le gestionnaire de voyage 58 comporte aussi au moins une unité de gestion des paramètres du voyage 61 tels que l'itinéraire, la plage horaire de fonctionnement, la langue de diffusion des animations "multimédia", mais aussi les interventions du conducteur 62 par l'intermédiaire d'un clavier 63. Le gestionnaire de voyage 58 comporte également au moins une unité de gestion des animations 64 en relation avec le CD ROM 151 et au moins une unité de gestion des messages personnalisés 65 en relation avec la disquette 101. Ces deux dernières unités de gestion 64, 65 envoient les animations "multimédia" et les messages personnalisés à l'unité de diffusion des animations 55. Elles sont en relation permanente avec une unité de gestion des données GPS 66 qui reçoit en continu les données du récepteur GPS 201 qui permet de localiser précisément ledit véhicule 51 et avec l'horloge interne de la station informatique embarquée 50.

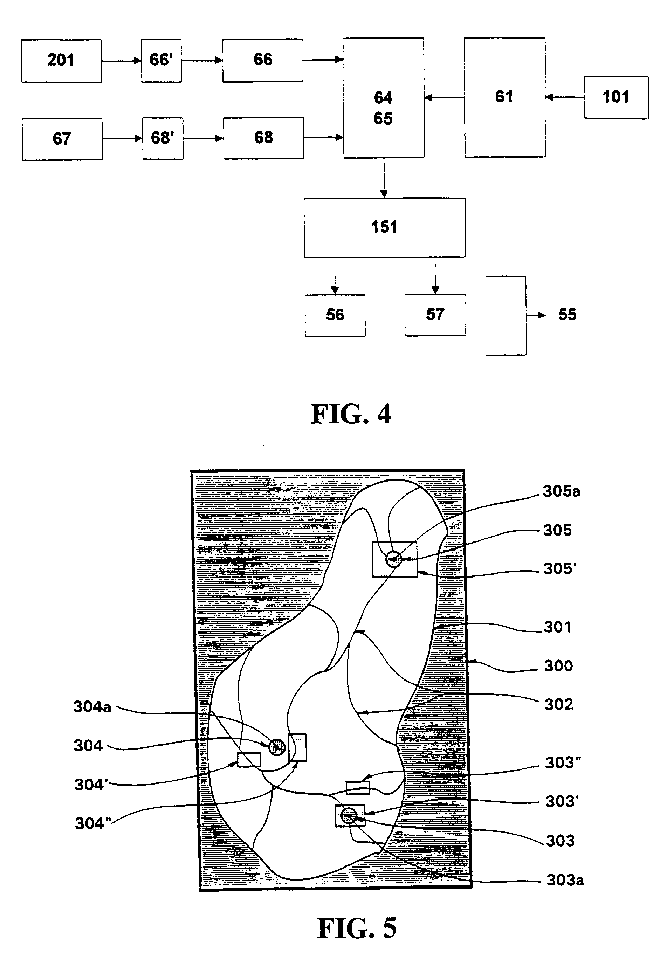

La figure 4 illustre de manière simple les principaux moyens mis en oeuvre dans la station embarquée 50. On y trouve le récepteur GPS 201 et l'horloge interne 67 de la station informatique qui fournissent périodiquement des données géographiques et horaires. Ces données sont mise en forme dans une unité de formatage 66', 68' et sont ensuite transmises aux unités de gestion des données géographiques 66 et horaires 68 qui communiquent avec les unités de gestion des animations 64 et des messages personnalisés 65. L'unité de gestion 64 génère l'envoi des animations du CD ROM 151 vers l'unité de diffusion 55 en fonction des données géographiques. L'unité de gestion 65 génère la création des messages personnalisés et leur envoi vers l'unité de diffusion 55 en fonction des données géographiques et/ou horaires. En parallèle, l'unité de paramétrage 61 alimentée par la disquette voyage 101 qui contient les paramètres d'un voyage communique avec l'unité de gestion des animations 64 et lui permet de sélectionner les animations et les messages personnalisés à envoyer en fonction des paramètres définis. Grâce à cette configuration, seules les animations et messages sélectionnés et paramétrés sont diffusés.

Dans tout le texte de la présente demande, on entend par "module" et "unité", des programmes informatiques spécifiques dont les organigrammes de fonctionnement sont représentés et détaillés ci-après. Mais tout d'abord certains termes utilisés dans lesdits organigrammes sont définis ci-dessous :
- on entend par "zone d'influence", un ensemble de points définis par leurs coordonnées géographiques (latitude et longitude) associés à un site. Chaque site mémorisé dans la base de données des animations "multimédia" 151 est associé à une ou plusieurs zones d'influence. Les zones d'influence sont disposées de façon à couvrir les zones de passage du véhicule équipé de l'équipement "Médiabus®". L'entrée du véhicule dans une des zones d'influence provoque la transmission par l'unité de gestion des animations 64 de l'animation du site en question vers l'unité de diffusion des animations 55 et peut parallèlement désactiver toutes les zones d'influence associées à ce site pour éviter une nouvelle diffusion de l'animation.
- on entend par "point réel", un point géographique associé à un site, ce point étant placé sur la zone géographique du site et permettant lors de la diffusion de l'animation du site concerné d'afficher à l'écran si le site présenté se trouve à gauche ou à droite du véhicule.
- on entend par "site", un lieu proprement dit tel qu'une ville, un village, etc. Un site peut contenir des "sous-sites" qui sont des lieux précis du site tel qu'un monument historique, une place, un quartier, etc. Un site peut être présenté d'une manière globale ou détaillée. On entend également par "site", un thème relatif à une région, un département, un pays ou autre. Un thème peut être associé à une ou plusieurs zones d'influence et éventuellement à un point réel.
- on entend par "présentation globale" d'un site, une animation multimédia présentant les grandes caractéristiques du site en question (aspect historique, économique, etc.). Une présentation globale peut être associée à une ou plusieurs zones d'influence et éventuellement à un point réel.
- on entend par "présentation détaillée" d'un site, un ensemble d'animations multimédia relatives aux sous-sites du site en question.
- on entend par "approche" une zone d'influence englobant les zones d'influence de tous les sous-sites du site concerné et éventuellement un point réel.

La figure 5 illustre un exemple de découpage géographique d'une ville dans le cadre d'une présentation détaillée. Le rectangle extérieur 300 définit une zone d'influence de l'approche. Le contour 301 définit le site correspondant à une ville, les traits 302 représentant les routes à l'intérieur du site de la ville. Les cercles 303, 304 et 305 représentent trois sous-sites du site de la ville. Les petits rectangles 303', 303", 304', 304" et 305' constituent les zones d'influence associées aux sous-sites correspondants 303, 304 et 305. Les points 303a, 304a et 305a représentent les points réels associés aux sous-sites correspondants 303, 304 et 305.

Dans la base de données des animations "multimédia" 151, chaque site, sous-site ou thème est associé à une collection d'animations multimédia et à une collection de zones d'influence. C'est dans l'unité de sélection des animations "multimédia" 64 que l'utilisateur sélectionne pour chaque site, sous-site ou thème, une animation parmi la collection d'animations multimédia relatif au site, thème ou sous-site en question.

Pour préparer un voyage, le personnel 25 d'une agence de voyage 11 réalise les opérations suivantes conformément aux organigrammes suivants :

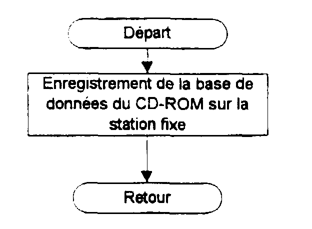

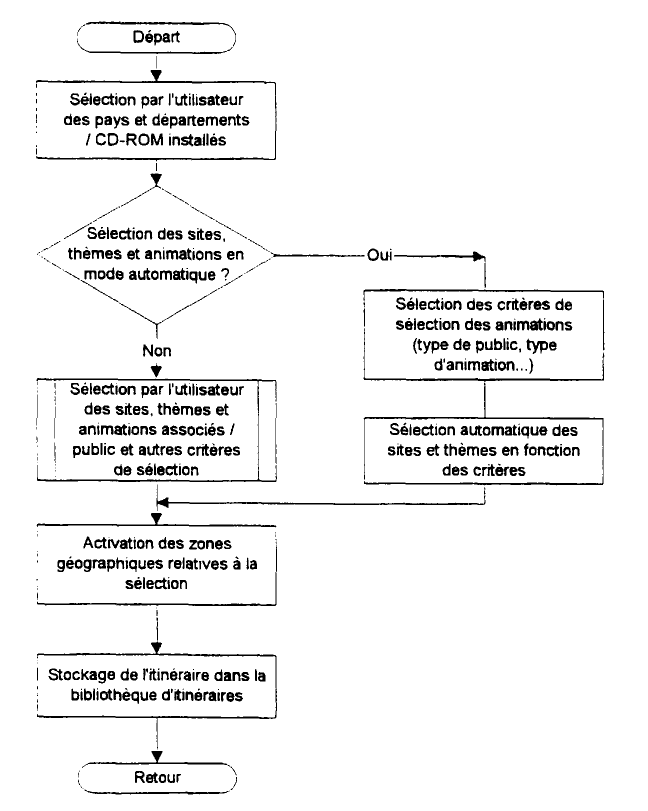

Au départ, l'utilisateur installe le ou les CD ROM 151 contenant les bases de données des animations "multimédia" sur l'ordinateur 12 de la station informatique fixe 10 et copie au moins une partie du contenu du ou des CD ROM 151 dans la base de données "multimédia" 152 de l'ordinateur. L'utilisateur a ensuite le choix de sélectionner automatiquement ou manuellement les animations correspondant aux sites et thèmes qu'il souhaite diffuser au cours du voyage. Dans un premier temps, l'utilisateur sélectionne les pays et départements, disponibles sur les CD ROM installés, susceptibles d'être traversés par le véhicule. En mode automatique, il indique les critères de sélection des animations tels que le type de public, le type d'animation, etc. Les sites et thèmes sont alors sélectionnés automatiquement en fonction de ces critères. En mode manuel, qui est détaillé ci-après, l'utilisateur sélectionne au moyen de l'unité de sélection des animations "multimédia" 16, les sites et thèmes ainsi que les animations qui y sont associées en fonction du public et/ou d'autres critères. Après avoir sélectionné les animations, les zones géographiques d'influence relatives à cette sélection sont activées. L'ensemble de ces zones d'influence constitue un itinéraire qui est ensuite stocké dans la bibliothèque d'itinéraires 17 de manière à pouvoir le reprendre et/ou le modifier selon les besoins.

L'organigramme ci-après montre plus en détail les différentes phases nécessaires pour sélectionner les sites et thèmes en mode manuel.

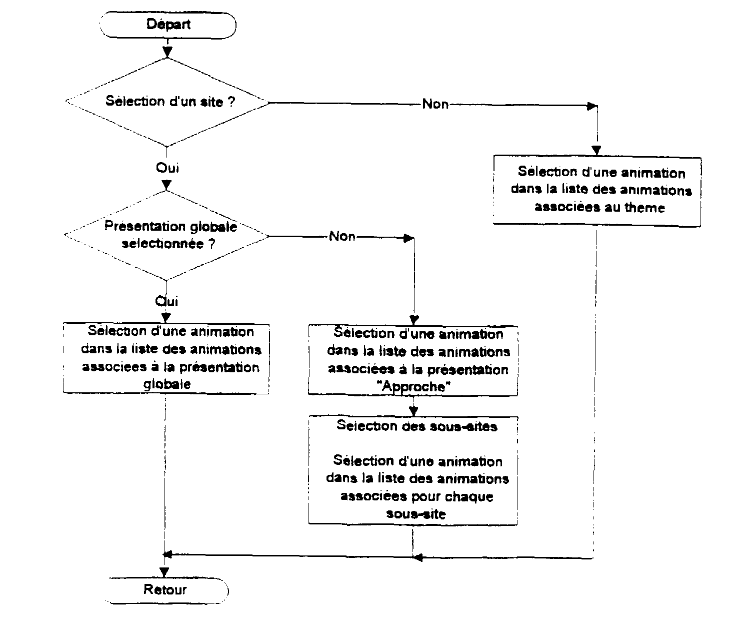

Pour un site, l'utilisateur sélectionne soit une présentation globale, soit une présentation détaillée. Pour une présentation globale, il sélectionne une animation parmi la collection des animations correspondante. Pour une présentation détaillée, il sélectionne pour l'approche et chaque sous-site, une animation parmi la collection d'animations correspondante respectivement à l'approche et à chaque sous-site. Pour un thème, il sélectionne une animation parmi la collection d'animations associée au thème.

Ensuite, l'utilisateur crée des messages personnalisés au moyen de l'unité de création de messages personnalisés 20 et selon l'organigramme suivant. Comme messages personnalisés, on entend par exemple les messages d'accueil, le programme de la journée, les menus de la journée, des promotions pour les prochains voyages, etc.

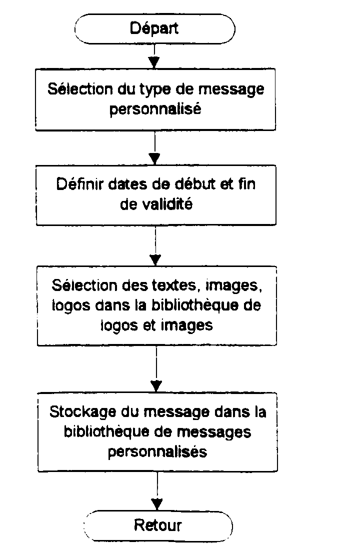

Il définit tout d'abord les données horaires associées auxdits messages, telles que les dates de début et de fin de validité des messages. Puis il sélectionne les textes des messages personnalisés ainsi que les images de fond, les logos, etc., pouvant être déjà contenus dans des bibliothèques existantes 21, 22 contenant des images, des logos, ou d'autres éléments selon les besoins. L'utilisateur mémorise ensuite ces messages personnalisés dans une bibliothèque de messages personnalisés 23 de manière à pouvoir les reprendre et/ou les modifier selon les besoins.

Après avoir effectué ces travaux préparatoires, l'utilisateur peut organiser son voyage selon l'organigramme suivant :

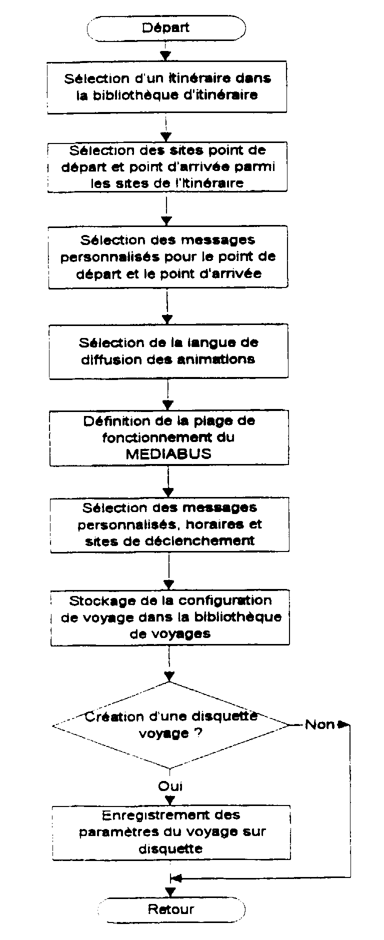

Il détermine les paramètres du voyage au moyen de l'unité de paramétrage 18 en choisissant un itinéraire du voyage dans la bibliothèque d'itinéraires, sélectionne les sites de départ et d'arrivée parmi les sites de l'itinéraire 17, sélectionne les messages personnalisés pour les points de départ et d'arrivée dans la bibliothèque de messages 23, choisit la langue de diffusion des animations "multimédia", définit la plage horaire de fonctionnement de l'équipement "Médiabus®", sélectionne les messages personnalisés dans la bibliothèque de messages 23 et définit les heures et sites de déclenchement desdits messages. Après avoir sélectionné tous ces paramètres, l'utilisateur les mémorise dans la bibliothèque de voyages 19 de manière à pouvoir les reprendre et/ou les modifier selon les besoins. Il peut créé ensuite une disquette "voyage" 101 sur laquelle il enregistre ces paramètres de voyage, de manière à pouvoir les transmettre à la station informatique embarquée 50.

La station informatique fixe 10 comporte également une unité de test 24 permettant à l'utilisateur de tester le contenu d'un voyage selon l'organigramme suivant.

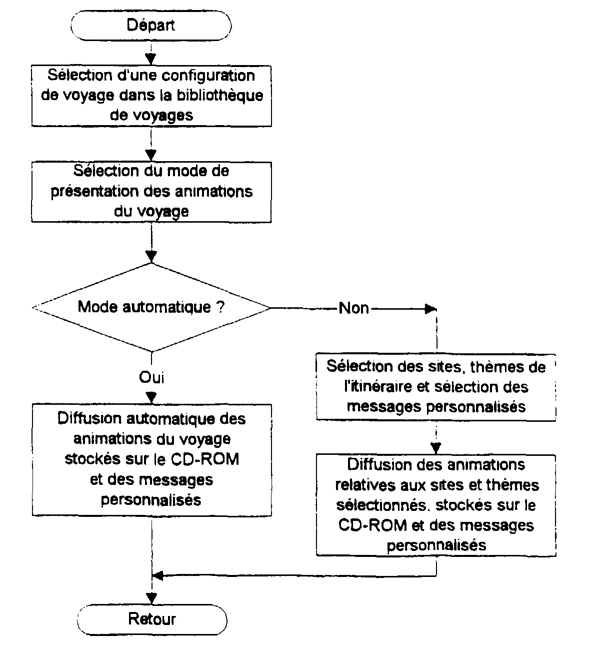

Il choisit un voyage dans la bibliothèque de voyages 19 et charge la station fixe 10 avec le CD ROM 151 correspondant. Il peut ensuite choisir entre un mode de présentation des animations du voyage automatique ou manuel. En mode automatique, toutes les animations sont diffusées automatiquement. En mode manuel, il peut sélectionner la diffusion des animations en fonction des sites ou des thèmes de l'itinéraire. Les messages personnalisés sont également diffusés simultanément.

Au moment du départ du voyage, le conducteur 62 de l'autocar 51 insère la disquette "voyage" 101 et le CD ROM 151 correspondant dans leurs lecteurs respectifs 53, 54 de la station informatique embarquée 50. Dès la mise en route de cette station, l'unité de mise en route 59 du module "gestionnaire de voyages" 58 se charge d'acquérir dans l'unité mémoire 60 les données contenues sur la disquette "voyage" 101 et sur le CD ROM 151. L'unité de gestion des animations 64 contrôle l'envoi des animations "multimédia" vers l'unité de diffusion des animations 55 en fonction des données du récepteur GPS 201 et des paramètres du voyage par l'intermédiaire de l'unité de gestion de ces paramètres 61 en scrutant la base de données du CD ROM 151. Pour l'envoi d'une animation, l'unité de gestion des animations 64 copie le contenu correspondant du CD ROM 151 vers l'unité de diffusion des animations 55. Par ailleurs, l'unité de gestion des messages personnalisés 65 se charge d'envoyer à l'unité de diffusion des animations 55, les messages personnalisés en fonction des paramètres suivants : date, heure et/ou lieu de diffusion desdits messages. L'unité de gestion des données GPS 66 se charge de recevoir les données du récepteur GPS 201. Elle les traite et diffuse les signaux vers les unités de gestion des animations 64 et des messages personnalisés 65 pour piloter automatiquement la diffusion des animations "multimédia" et des messages personnalisés correspondants. Toutes ces opérations sont détaillées dans les organigrammes suivants.

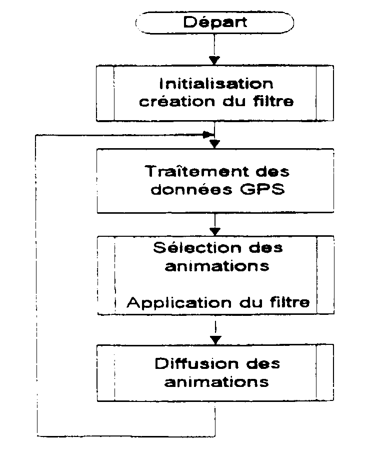

Au démarrage, il y a une phase d'initialisation de la station informatique fixe 50 et d'acquisition des paramètres du voyage, qui est détaillée ci-après. Ensuite, les données géographiques reçues du récepteur GPS sont traitées par l'unité de gestion correspondante 66, de même que les données horaires reçues de l'horloge interne de la station informatique. En fonction de ces données géographiques et horaires et des paramètres du voyage, les animations sont sélectionnées par l'unité de gestion des animations 64, qui est décrit plus loin, puis sont diffusées par l'unité de diffusion 55, qui est également décrit plus loin.

Le récepteur GPS fournit en permanence et à une fréquence de l'ordre de la seconde, des données géographiques, qui sont formatées, selon l'organigramme de fonctionnement suivant.

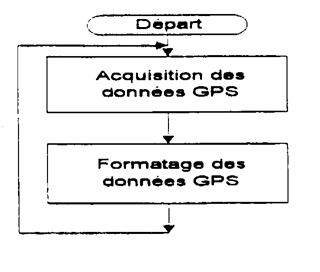

L'initialisation et l'acquisition des paramètres du voyage sont détaillées dans l'organigramme suivant.

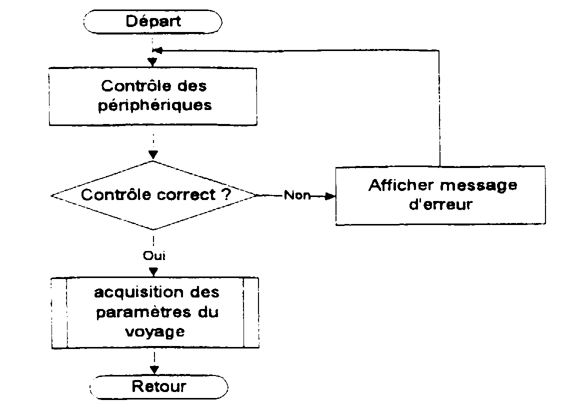

Au départ, il y a un contrôle automatique des périphériques de la station informatique embarquée 50. En cas d'anomalies, un message d'erreur est affiché. Sinon, l'acquisition des paramètres du voyage peut s'effectuer selon l'organigramme suivant.

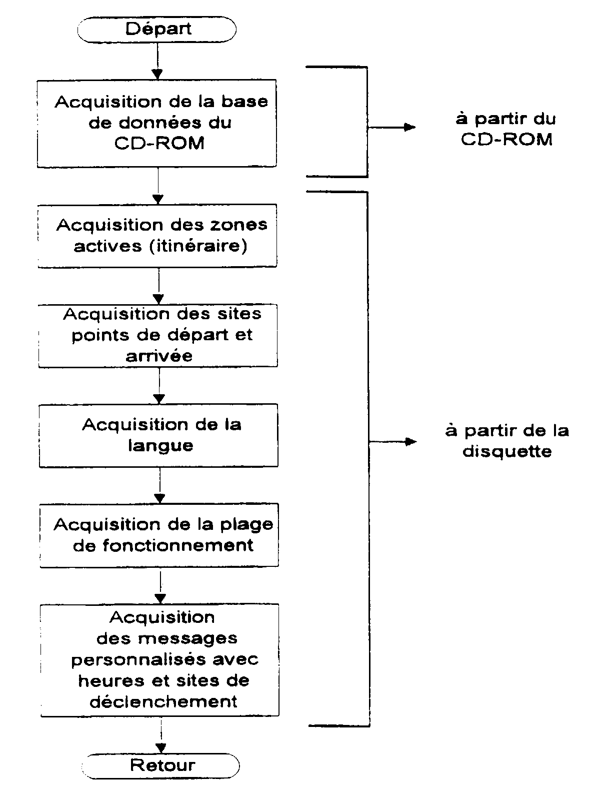

Dans un premier temps, la base de données contenant les animations "multimédia" est chargée à partir du CD-ROM 151 dans l'unité mémoire 60. Puis, sont chargés, à partir de la disquette 101 dans l'unité mémoire 60, les paramètres du voyage tels que l'itinéraire constitué par les zones d'influence actives, les sites des points de départ et d'arrivée, la langue des animations, la plage horaire de fonctionnement, les messages personnalisés et les heures de déclenchement.

Le mode opératoire de la sélection des animations par l'unité des gestion des animations 64 est représenté par l'organigramme suivant.

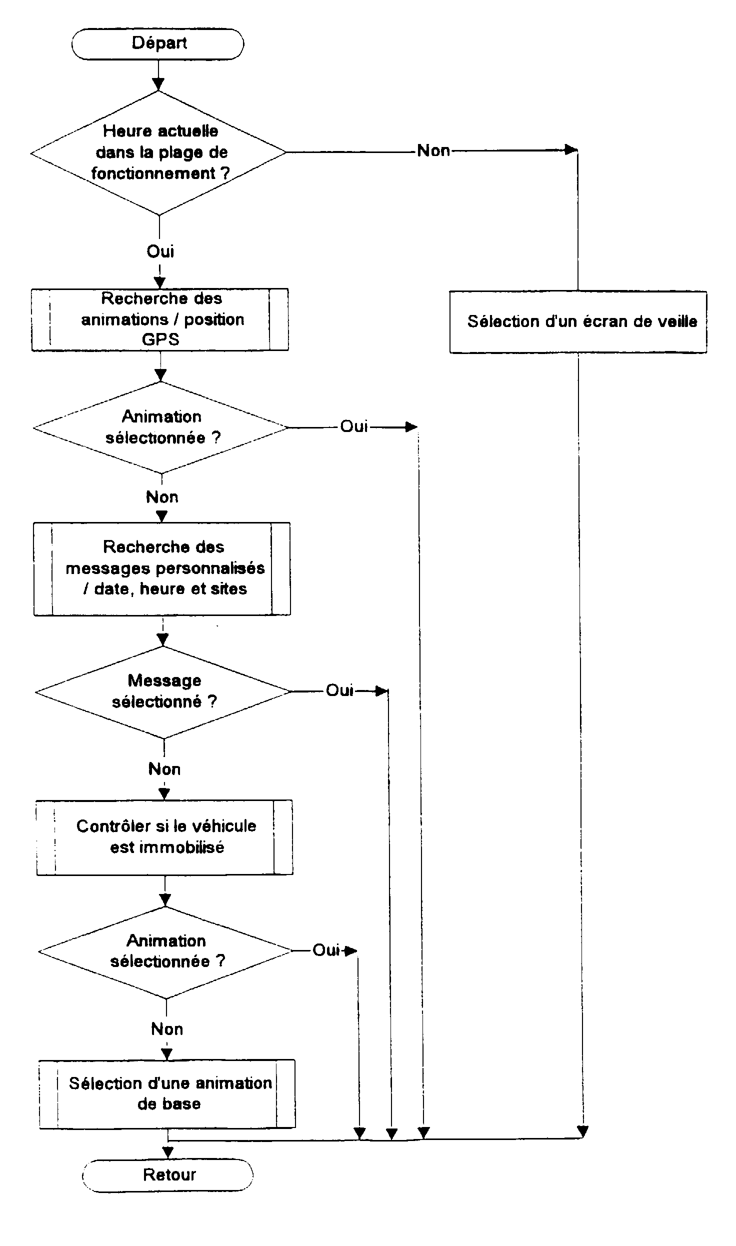

Si l'heure réelle n'est pas inclue dans la plage horaire de fonctionnement de l'équipement "Médiabus®", un écran de mise en veille est sélectionné et diffusé. Si l'heure réelle est inclue dans la plage horaire de fonctionnement alors les animations sont diffusées dans l'ordre de recherche suivant :
- recherche des animations en fonction des données géographiques du GPS, dont le détail est donné ci-après,
- recherche des messages personnalisés en fonction des données horaires et/ou géographiques, dont le détail est donné ci-après,
- recherche d'animations d'attente si le véhicule est immobilisé, dont le détail est donné ci-après.

Si aucune de ces animations n'est sélectionnée alors une animation de base est sélectionnée, dont le détail est donné ci-après.

L'ordre de recherche des animations donné ci-dessus peut être modifié en fonction des applications.

La recherche des animations en fonction des données géographiques est détaillée dans l'organigramme suivant.

Si le véhicule entre dans une zone d'influence active et si cette zone est associé à un site ou à un sous-site, il y a soit une présentation détaillée, soit une présentation globale du site. Dans l'hypothèse où le site est associé au point de départ ou d'arrivée du voyage, il est prévu de diffuser l'animation sélectionnée correspondante. Ce test est détaillé plus loin. Dans tous les cas, lors de la présentation globale ou détaillée d'un site ou sous-site, les zones d'influence correspondantes sont désactivées pour éviter de diffuser les mêmes animations plusieurs fois. Si la zone d'influence traversée par le véhicule n'est pas associée à un site ou un sous-site, mais à un thème, alors l'animation correspondante est sélectionnée et les zones d'influence correspondantes sont désactivées. Sinon, aucun animation n'est sélectionnée.

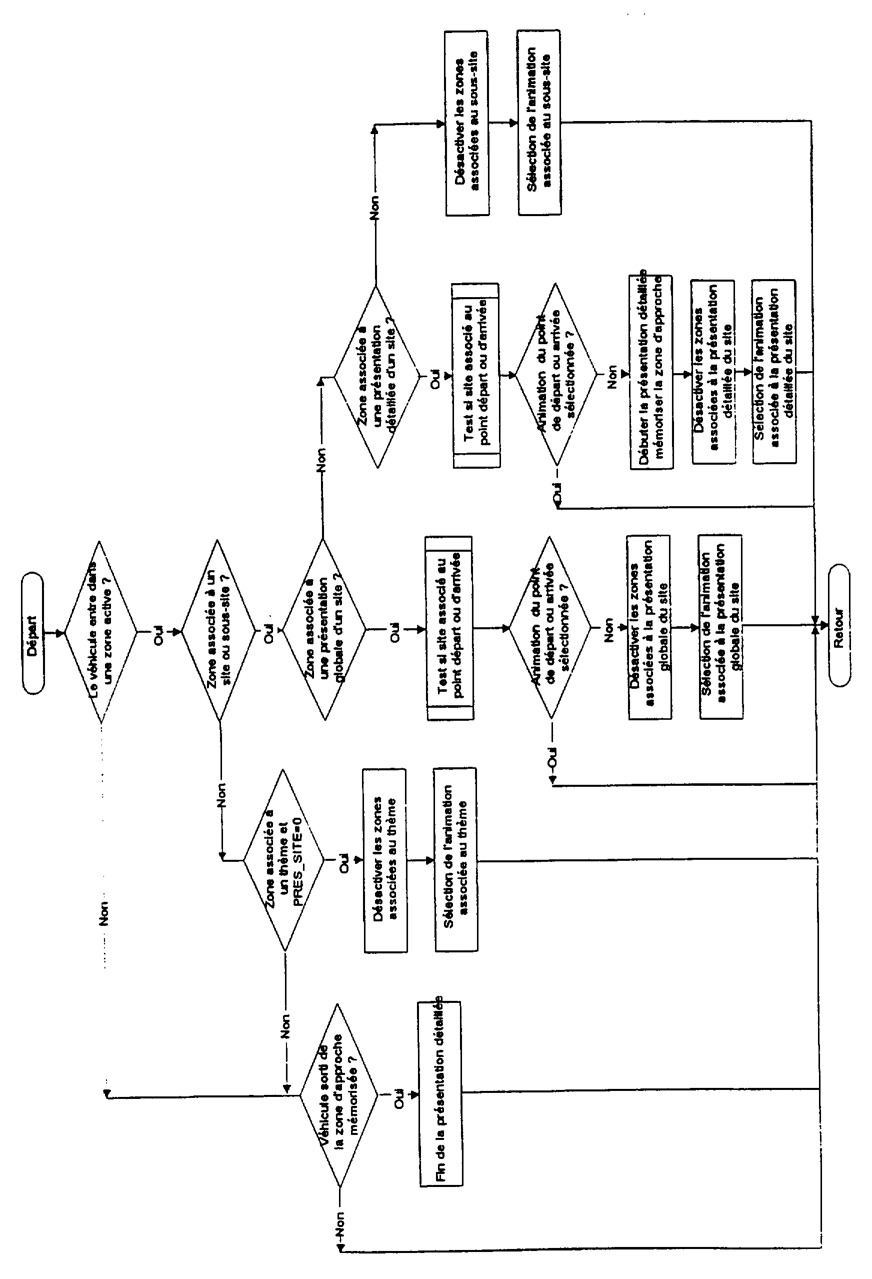

Pour tester si un site est associé au point de départ ou d'arrivée, il est comparé d'abord au point de départ. S'il lui correspond alors la détection du point de départ est désactivée et l'animation associée au point de départ est sélectionnée. Sinon, il est comparé au point d'arrivée. S'il lui correspond alors la détection du point d'arrivée est désactivée et l'animation associée au point d'arrivée est sélectionnée. L'organigramme correspondant est le suivant.

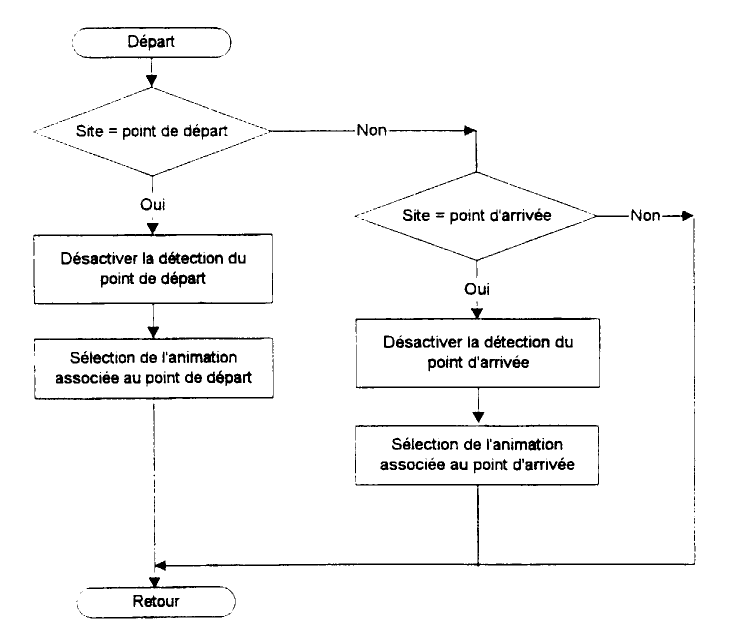

La recherche des messages personnalisés en fonction des données horaires est détaillée dans l'organigramme suivant.

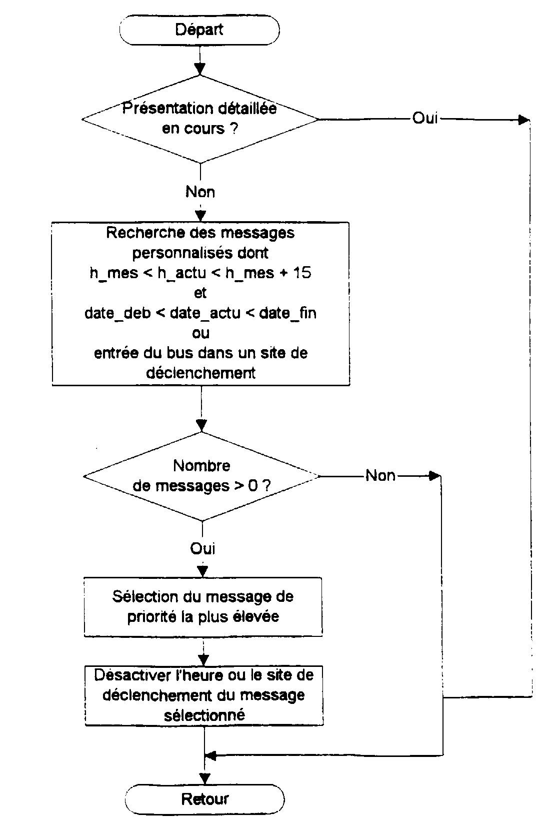

S'il n'y a pas d'animations sélectionnées par rapport à un site et pas de présentation détaillée en cours, si l'heure réelle correspond à l'heure de déclenchement, à 15 minutes près, d'un message personnalisé, et si la date réelle correspond à la date de validité dudit message alors ce message est sélectionné et son heure de déclenchement est désactivée. Dans le cas où il existe plusieurs messages, un ordre de priorité est déterminé.

La recherche d'animations d'attente si le véhicule est immobilisé est détaillée dans l'organigramme suivant.

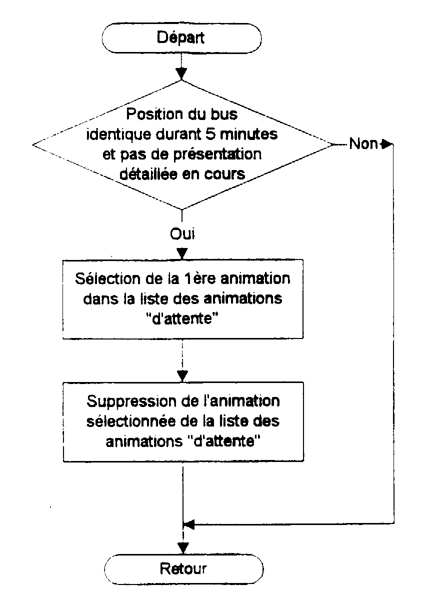

Si la position géographique du véhicule est inchangée pendant un laps de temps déterminé, par exemple 5 minutes, et si aucune animation d'un site ou sous-site n'est sélectionnée, alors la première animation prévue dans la liste des animations d'attente est sélectionnée, puis supprimée de la liste.

Dans l'hypothèse où plus aucune animation ou plus aucun message n'est en cours de diffusion, alors il est possible d'afficher des animations de base, qui peuvent être par exemple une cane routière sur laquelle on visualise le véhicule se déplaçant en temps réel, ou l'affichage de la vitesse du véhicule, l'altitude, ou autre. Ces animations de base ne durent généralement que quelques minutes.

La diffusion des animations est détaillée par l'organigramme suivant.

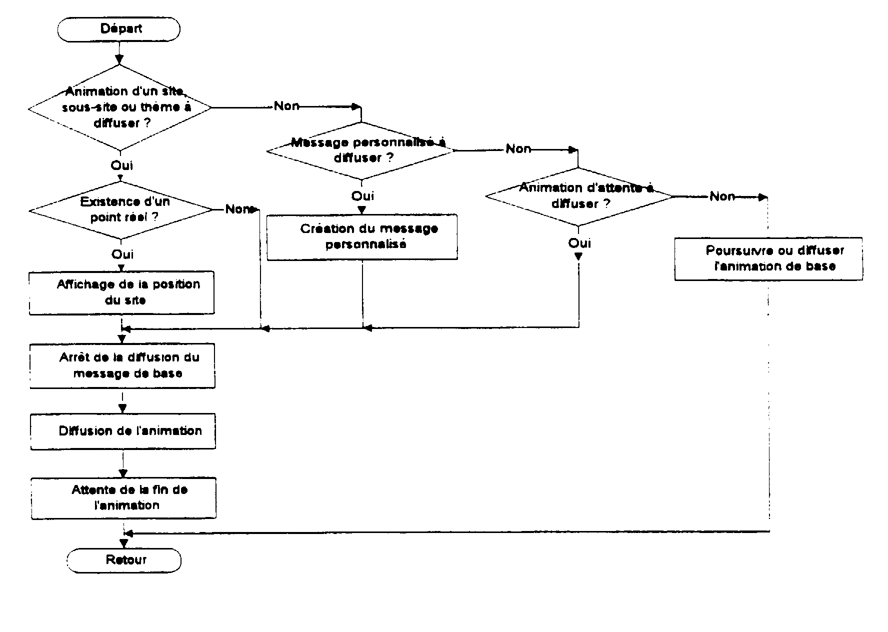

Si une animation relative à un site, un sous-site ou un thème est à diffuser alors la diffusion de l'animation de base est interrompue. En cas d'existence d'un point réel associé audit site, sous-site ou thème, la position correspondante est affichée et l'animation est diffusée par l'unité de diffusion 55 dans sa totalité. S'il n'y a pas d'animation à diffuser, alors est diffusé dans l'ordre de priorité, un message personnalisé, une animation d'attente ou la suite de l'animation de base.

La description ci-dessus montre clairement que les buts recherchés par l'invention sont atteints. Les animations diffusées étant du type "multimédia" permettent de fournir des informations très détaillées, précises, variées, très attrayantes et conviviales sur les sites traversés par le véhicule, ces sites n'étant pas forcément visibles dudit véhicule. Les bases de données "multimédia" contenues sur les CD ROM sont évolutives et peuvent être définies selon des applications très ciblées, comme par exemple des applications ludiques pour les enfants à l'occasion de voyages de découverte, des applications personnalisées à une destination précise comme par exemple la route des vins.

La présente invention n'est cependant pas limitée à l'exemple de réalisation et d'application décrit mais s'étend à toute modification, variante et/ou application évidente pour un homme du métier.

Par exemple, pour rester dans le cadre des voyages, la station informatique embarquée pourrait être disposée dans un bateau de type bateau mouche ou bateau de croisière. Les animations "multimédia" diffusées à l'intérieur par exemple d'un bateau mouche porteraient par exemple sur les différents monuments et quartiers visibles du bateau mais aussi sur d'autres sites non visibles mais illustrés par lesdites animations "multimédia" vidéos. Celles diffusées dans un bateau de croisière porteraient sur les pays, les rives côtières, les continents mais aussi sur les fonds marins. Cet exemple peut être évidemment étendu aux transports par air et par voies ferrées.

L'invention peut également être envisagée dans certains sports pour diffuser des animations "multimédia" relatifs à l'histoire d'un sport, la biographie de sportifs de haut niveau, la façon d'aborder certaines difficultés sportives par rapport à une situation donnée, etc. L'exemple du golf permet d'illustrer cette application. Dans ce cas, la voiture de golf est équipée d'une station informatique embarquée pourvue d'un écran miniaturisé et d'un récepteur de type GPS. En fonction de la position du joueur par rapport à un trou, cette station pourra lui donner des informations précises sur la manière d'appréhender le coup. Ces informations, contenues sur un disque compact comportant une base de données appropriée, peuvent par exemple illustrer un joueur dans une situation similaire et sa façon d'appréhender la balle. Dans ce cas, la station informatique fixe et la disque de transmission de données ne sont pas obligatoires étant donné que la base de données sur le disque compact est suffisante.

Un autre exemple dans lequel l'invention présente un intérêt considérable concerne les visites en groupe d'usines, de grandes entreprises, de grands complexes, et même de musées ou de tout autre lieu public. Compte tenu du déplacement en groupe, la plupart des visiteurs n'entendent pas les explications données par le guide. Dans d'autres cas, il n'est prévu aucune explication alors qu'une information de base serait appréciée. Il peut être alors envisagé de réaliser des CD ROM pour chaque application spécifique et contenant un maximum d'informations utiles sur le sujet à traiter. Les stations informatiques embarquées peuvent être adaptées et miniaturisées en fonction du véhicule. Elles peuvent éventuellement devenir portables pour être transportées par l'utilisateur se déplaçant à pieds. La localisation du véhicule ou de l'utilisateur est effectuée également par un récepteur de type GPS ou par un autre système selon l'application envisagée. Les animations "multimédia" contenues sur le disque compact correspondant sont alors diffusées automatiquement en fonction du lieu où se trouve le véhicule ou l'utilisateur.

Ces exemples d'application non exhaustifs illustrent clairement les multiples possibilités offertes par la présente invention.

## Revendications

1. Equipement informatique (1) du type "multimédia" pour la diffusion automatique d'animations "multimédia" en fonction d'une position géographique et/ou d'une heure définie et/ou d'une date fixée à bord d'un véhicule (51), par exemple pour la diffusion d'animations "multimédia" touristiques dans le cadre d'un voyage effectué à bord de ce véhicule, cet équipement comportant au moins une station informatique embarquée (50) installée dans ledit véhicule, ladite station comportant au moins des moyens de stockage des animations "multimédia" (150), au moins une unité de gestion de ces animations "multimédia" (64), au moins une unité de diffusion (55) desdites animations "multimédia", au moins des moyens de localisation automatique (200) du véhicule (51), ces moyens comportant un récepteur du type GPS (201) embarqué dans ledit véhicule (51) et agencé pour délivrer en continu des données géographiques relatives à la position du véhicule et au moins des moyens de détection horaire comportant une horloge et agencés pour délivrer en continu des données horaires, ces données géographiques et/ou horaires étant agencées pour communiquer avec l'unité de gestion (64) de manière à diffuser les animations "multimédia" appropriées en fonction de la position géographique dudit véhicule (51) et/ou en fonction de l'heure et/ou de la date, l'unité de diffusion des animations (55) étant couplée à au moins un écran de télévision (56) et à au moins un haut-parleur (57) installés dans ledit véhicule (51), caractérisé en ce que ladite station embarquée (50) comporte des moyens de stockage des paramètres du voyage (101) différents des moyens de stockage des animations "multimédia" et contenant des informations sur l'itinéraire du voyage prévu et sur les intérêts et les types de voyageurs attendus, ces moyens de stockage des paramètres du voyage étant préparés dans une station informatique fixe, ladite station embarquée comportant également une unité de gestion des paramètres du voyage (61) qui communique avec l'unité de gestion des animations "multimédia" (64) de manière à générer l'envoi desdites animations vers l'unité de diffusion de ces animations (55) en fonction en plus des paramètres du voyage.

2. Equipement selon la revendication 1, caractérisé en ce que la station embarquée comporte une unité mémoire (60) dans laquelle sont chargés la base de données, les animations et les paramètres du voyage à partir des moyens de stockage correspondants (150, 101).

3. Equipement selon la revendication 1, caractérisé en ce qu'il comporte une station informatique fixe (10) comportant au moins des moyens de stockage des animations "multimédia" (150), au moins une unité de sélection de ces animations "multimédia" (16) et au moins une unité de paramétrage (18) dudit voyage, et en ce qu'il comporte des moyens de transmission (100) de ces données à la station informatique embarquée (50).

4. Equipement selon la revendication 3, caractérisé en ce que les stations informatiques fixe (10) et embarquée (50) comportent un ordinateur (12, 52) du type "multimédia" pourvu au moins d'un lecteur optique (14, 54) et en ce que les moyens de stockage des animations "multimédia" (150) comportent au moins un CD ROM (151) contenant au moins une base de données "multimédia" correspondant aux animations à diffuser.

5. Equipement selon la revendication 3, caractérisé en ce que l'unité de sélection desdites animations "multimédia" (16) est agencée pour pouvoir sélectionner les animations à diffuser dans les moyens de stockage de ces animations "multimédia" (150) en correspondance à un itinéraire de voyage choisi et en fonction du public et/ou d'un thème.

6. Equipement selon la revendication 5, caractérisé en ce que l'unité de paramétrage (18) dudit voyage est agencée pour pouvoir définir les paramètres du voyage, ces paramètres comportant au moins un itinéraire associé aux animations "multimédia" sélectionnées dans l'unité de sélection (16) et des données horaires.

7. Equipement selon la revendication 6, caractérisé en ce que la station informatique fixe (10) comporte une unité de création de messages personnalisés (20), en ce que ces messages personnalisés sont associés à l'unité de paramétrage (18) et sont transmis à la station informatique embarquée (50) par lesdits moyens de transmission (100) et en ce que la station informatique embarquée (50) comporte une unité de gestion de ces messages personnalisés (65).

8. Equipement selon la revendication 7, caractérisé en ce que l'unité de gestion des messages personnalisés (65) est agencée pour générer l'envoi des messages personnalisés vers l'unité de diffusion des animations en fonction des données géographiques et/ou horaires et en fonction des paramètres du voyage.

9. Equipement selon la revendication 3, caractérisé en ce que la station informatique fixe (10) comporte au moins une unité de test de voyage (24) agencée pour visualiser les paramètres du voyage sélectionné et visualiser les animations correspondantes.

10. Equipement selon la revendication 7, caractérisé en ce que la station informatique fixe (10) comporte des bibliothèques (17, 19, 23) agencées pour stocker respectivement des itinéraires créés par l'unité de sélection des animations (16), des voyages créés par l'unité de paramétrage (18) et des messages personnalisés créés par l'unité de création des messages (20).

11. Equipement selon la revendication 7, caractérisé en ce que l'unité de gestion des animations (64) et l'unité de gestion des messages personnalisés (65) sont agencées pour rechercher les animations et/ou les messages à diffuser en fonction d'un ordre de priorité défini dans les paramètres du voyage.

12. Equipement selon la revendication 1, caractérisé en ce que l'unité de gestion des animations (64) est agencée pour générer l'envoi d'une animation d'attente, si les données géographiques fournies par le récepteur du type GPS (201) sont inchangées pendant un laps de temps défini dans les paramètres du voyage.

13. Equipement selon la revendication 3, caractérisé en ce que les moyens de transmission (100) comportent une disquette (101) et en ce que les stations informatiques fixe (10) et embarquée (50) comportent un lecteur de disquettes (13, 53).

14. Equipement selon la revendication 3, caractérisé en ce que les moyens de transmission (100) comportent un émetteur radio et en ce que ladite station informatique embarquée (50) comporte un récepteur radio.

15. Equipement selon la revendication 3, caractérisé en ce que les moyens de transmission (100) comportent un modem téléphonique et en ce que ladite station informatique embarquée (50) comporte un modem équivalent.

## Patentansprüche

1. Multimediainformationssystem (1) für die automatische Übertragung an Bord eines Fahrzeugs (51) von Multimedia-Vorstellungen in Abhängigkeit von einer geographischen Lage und/oder einer bestimmten Uhrzeit und/oder eines bestimmten Datums, beispielsweise für die Übertragung von touristischen Multimedia-Vorstellungen im Rahmen eines an Bord dieses Fahrzeugs gemachten Reise, wobei dieses System mindestens aus einer in dem besagten Fahrzeug installierten Bord-EDV-Station (50) besteht, wobei die besagte Station aus mindestens Speicherungsmittel der Multimedia-Vorstellungen (150), mindestens einer Einheit zur Verwaltung dieser Multimedia-Vorstellungen (64), mindestens einer Übertragungseinheit (55) der besagten Multimedia-Vorstellungen, mindestens Mittel zur automatischen Lagebestimmung (200) des Fahrzeugs (51) besteht, wobei diese Mittel einen an Bord des besagten Fahrzeugs (51) installierten Empfänger des Typs GPS (201) enthalten, der ausgelegt ist, um kontinuierlich geographische Angaben hinsichtlich der Lage des Fahrzeugs zu liefern, sowie mindestens eine Uhr betragende Zeitbestimmungsmittel, die ausgelegt sind, um kontinuierlich Zeitangaben zu liefern, wobei diese geographischen und/oder zeitlichen Angaben ausgelegt sind, um mit der Verwaltungseinheit (64) in Verbindung zu stehen um die der geographischen Lage des besagten Fahrzeugs (51) und/oder der Uhrzeit und/oder dem Datum entsprechenden Multimedia-Vorstellungen zu übertragen, wobei die Übertragungseinheit (55) der Multimedia-Vorstellungen an mindestens einem Fernsehbildschirm (56) und mindestens einem Lautsprecher (57), die im besagten Fahrzeug (51) installiert sind, angeschlossen ist, dadurch gekennzeichnet, daß die besagte Bord-Station (50) Speicherungsmittel der Reiseparameter (101) beträgt, die verschieden von den Speicherungsmittel der Multimedia-Vorstellungen sind, und die Informationen hinsichtlich der vorgesehenen Reisestrecke sowie über die Interessen und die Art der erwarteten Reisenden enthält, wobei diese Speicherungsmittel der Reiseparameter auf einer ortsfesten EDV-Station vorbereitet werden, wobei die besagte Bord-Station ebenfalls eine Einheit zur Verwaltung der Reiseparameter (61) besitzt, die mit der Einheit zur Verwaltung der Multimedia-Vorstellungen (64) in Verbindung steht um die Sendung der besagten Vorstellungen an die Übertragungseinheit dieser Vorstellungen (55) zusätzlich in Abhängigkeit der Reiseparameter zu generieren.

2. Informationssystem gemäß Anforderung 1, dadurch gekennzeichnet, daß die Bord-Station mindestens eine Speichereinheit (60) beträgt, in welcher die Datenbank, die Vorstellungen und die Reiseparameter von den entsprechenden Speicherungsmittel (150, 101) aus geladen werden.

3. Informationssystem gemäß Anforderung 1, dadurch gekennzeichnet, daß es mindestens eine ortsfeste EDV-Station (10) beträgt, die aus mindestens Speicherungsmittel für die Multimedia-Vorstellungen (150), mindestens einer Einheit zur Wahl dieser Multimedia-Vorstellungen (16) und mindestens einer Einheit zur Bestimmung der Parameter (18) der besagten Reise besteht, und dadurch, daß es die Mittel (100) zur Sendung dieser Daten an die Bord-Station (50) beträgt.

4. Informationssystem gemäß Anforderung 3, dadurch gekennzeichnet, daß die ortsfeste EDV-Station (10) sowie die Bord-EDV-Station (50) einen Multimedia-Komputer (12, 52) betragen, der mindestens mit einem optischen Leser (14, 54) ausgerüstet ist, und dadurch, daß die Speicherungsmittel der Multimedia-Vorstellungen (150) mindestens ein CD-ROM (151) betragen, das mindestens eine den zu übertragenden Vorstellungen entsprechende Multimedia-Datenbank enthält.

5. Informationssystem gemäß Anforderung 3, dadurch gekennzeichnet, daß die Einheit (16) zur Wahl der besagten Multimedia-Vorstellungen angeordnet ist, um die zu übertragenden Vorstellungen in den Speicherungsmitteln dieser Multimedia-Vorstellungen (150) in Abhängigkeit einer gewählten Reisestrecke und des Publikums und/oder eines Themas wählen zu können.

6. Informationssystem gemäß Anforderung 5, dadurch gekennzeichnet, daß die Einheit zur Bestimmung der Parameter (18) der besagten Reise ausgelegt ist, um die Reiseparameter festlegen zu können, wobei diese Parameter mindestens eine mit den in der Wahl-Einheit (16) gewählten Multimedia-Vorstellungen und mit den Zeit-Angaben verbundene Reisestrecke betragen.

7. Informationssystem gemäß Anforderung 6, dadurch gekennzeichnet, daß die ortsfeste EDV-Station (10) eine Einheit zur Erstellung personalisierter Mitteilungen (20) beträgt, dadurch, daß diese personalisierten Mitteilungen mit der Einheit zur Bestimmung der Parameter (18) verbunden werden und mit Hilfe der besagten Sendungs-Mittel (100) an die Bord-EDV-Station (50) gesendet werden, und dadurch, daß die Bord-EDV-Station (50) eine Einheit zur Verwaltung dieser personalisierten Mitteilungen (65) beträgt.

8. Informationssystem gemäß Anforderung 7, dadurch gekennzeichnet, daß die Einheit zur Verwaltung der personalisierten Mitteilungen (65) ausgelegt ist, um das Senden der personalisierten Mitteilungen an die Übertragungseinheit der Vorstellungen in Abhängigkeit der geographischen und/oder zeitlichen Angaben zu veranlassen.

9. Informationssystem gemäß Anforderung 3, dadurch gekennzeichnet, daß die ortsfeste EDV-Station (10) mindestens eine Einheit zum Test der Reise (24) beträgt, die ausgelegt ist, um die Parameter der gewählten Reise anzuzeigen und um die entsprechenden Vorstellungen anzuzeigen..

10. Informationssystem gemäß Anforderung 7, dadurch gekennzeichnet, daß die ortsfeste EDV-Station (10) Bibliotheken (17, 19, 23) beträgt, die ausgelegt sind, um beziehungsweise durch die Einheit zur Wahl der Vorstellungen (16) erzeugte Reisestrecken, durch die Einheit zur Bestimmung der Parameter (18) erzeugte Reisen und durch die Einheit zur Erstellung von Mitteilungen erzeugte personalisierte Mitteilungen (20) zu speichern.

11. Informationssystem gemäß Anforderung 7, dadurch gekennzeichnet, daß die Einheit zur Verwaltung der Vorstellungen (64) und die Einheit zur Verwaltung der personalisierten Mitteilungen (65) ausgelegt sind, um die zu übertragenden Vorstellungen und/oder Mitteilungen gemäß einer in den Reiseparametern festgelegten Vorrangs-Reihenfolge zu übertragen.

12. Informationssystem gemäß Anforderung 1, dadurch gekennzeichnet, daß die Einheit zur Verwaltung der Vorstellungen (64) ausgelegt ist, um die Übertragung einer Warte-Vorstellung zu veranlassen wenn die durch den GPS-Typ-Empfänger (201) gelieferten geographischen Angaben während eines in den Reiseparametern bestimmten Zeitraums unverändert bleiben.

13. Informationssystem gemäß Anforderung 3, dadurch gekennzeichnet, daß die Sendungs-Mittel (100) eine Diskette (101) betragen, und dadurch, daß die ortsfeste EDV-Station (10) und die Bord-EDV-Station (50) jeweils ein Diskettenlaufwerk (13, 53) betragen.

14. Informationssystem gemäß Anforderung 3, dadurch gekennzeichnet, daß die Sendungs-Mittel (100) einen Radiosender betragen, und dadurch, daß die besagte Bord-EDV-Station (50) einen Radio-Empfänger beträgt.

15. Informationssystem gemäß Anforderung 3, dadurch gekennzeichnet, daß die Sendungs-Mittel (100) ein Telefon-Modem betragen, und dadurch, daß die besagte Bord-EDV-Station (50) ein gleichwertiges Telefon-Modem beträgt.

## Claims

1. Information technology equipment (1) of a multimedia type for the automatic distribution of multimedia animated sequences depending on a geographical position and/or defined time and/or specified date carried on-board a vehicle (51), for example for the distribution of tourist multimedia animated sequences in the framework of an excursion on-board the vehicle, the equipment including at least one on-board IT station (50) installed in the vehicle, this station incorporating at least means for storing the multimedia animated sequences (150), at least one unit for management of the multimedia animated sequences (64), at least one distribution unit (55) for the said multimedia animated sequences, at least means for automatic location (200) of the vehicle (51), these means comprising a GPS type receiver (201) on-board the said vehicle (51) and designed to continuously supply geographical data concerning the position of the vehicle, and at least one time detection means comprising a clock designed to continuously supply time data, such geographical and/or time data being designed to communicate with the management unit (64) so as to distribute the appropriate multimedia animated sequences depending on the geographical position of the vehicle (51) and/or the time and/or the date, the animated sequences distribution unit (55) being linked to at least one television screen (56) and at least one loudspeaker (57) installed in the said vehicle (51), characterised in that the on-board station (50) comprises means for storing the journey parameters (101) distinct from means for storing the "multimedia" animated sequences and containing information on the programmed journey itinerary and on the interests and types of anticipated passengers, these means for storing the journey parameters being prepared in a static IT station, the said on-board station also comprising a journey parameter management unit (61) which communicates with the multimedia animated sequences management unit (64) such as to send the said animated sequences to the distribution unit (55) of these sequences depending, in addition, on the journey parameters.

2. Equipment according to claim 1, characterised in that the on-board station comprises a memory unit (60) in which the database, the animated sequences and journey parameters are loaded from the corresponding storage means (150,101).

3. Equipment according to claim 1, characterised in that it comprises a static IT station (10) comprising at least means for storing the multimedia animated sequences (150), at least one unit for selection of the multimedia animated sequences (16) and at least one parametering unit (18) for the said journey and in that it comprises transmission means (100) to send these data to the on-board IT station (50).

4. Equipment according to claim 3, characterised in that the static (10) and on-board (50) IT stations comprise a computer (12, 52) of the multimedia type equipped with at least one optical reader (14, 54) and in that the means for storing the multimedia animated sequences (150) comprises at least one CD ROM (151) containing at least one multimedia database corresponding to the animated sequences to be distributed.

5. Equipment according to claim 3, characterised in that the unit for selection of the said multimedia animated sequences (16) is designed to select the animated sequences to be distributed from the means for storing the multimedia animated sequences (150) depending on the selected journey itinerary and the audience and/or a specific topic.

6. Equipment according to claim 5, characterised in that the parametering unit (18) of the said journey is designed to define the journey parameters, these parameters comprising at least one itinerary linked to the multimedia animated sequences selected from the selection unit (16) and time data.

7. Equipment according to claim 6, characterised in that the static IT station (10) comprises a customised message creation unit (20), in that the customised messages are linked to a parametering unit (18) and are transmitted to the on-board IT station (50) using the said transmission means (100) and in that the on-board IT station (50) comprises a customised messages management unit (65).

8. Equipment according to claim 7, characterised in that the customised messages management unit (65) is designed to send the customised messages to the animated sequence distribution unit depending on the geographical and/or time data and depending on the journey parameters.

9. Equipment according to claim 3, characterised in that the static IT station (10) comprises at least one journey test unit (24) designed to display the selected journey parameters and the corresponding animated sequences.

10. Equipment according to claim 7, characterised in that the static IT station (10) includes libraries (17, 19, 23) designed to store respectively, itineraries created by the animated sequences selection unit (16), journeys created by the parametering unit (18) and customised messages created by the message creation unit (20).

11. Equipment according to claim 7, characterised in that the animated sequences management unit (64) and the customised messages management unit (65) are designed to search the animated sequences and/or the messages to be distributed depending on an order of priority defined in the journey parameters.

12. Equipment according to claim 1, characterised in that the animated sequences management unit (64) is designed to send waiting animated sequences, if the geographical data supplied by the GPS type receiver (201) do not change during a pre-defined period specified in the journey parameters.

13. Equipment according to claim 3, characterised in that the transmission means (100) comprise a diskette (101) and in that the static (10) and on-board (50) IT stations comprise a disk drive (13, 53).

14. Equipment according to claim 3, characterised in that the transmission means (100) comprise a radio transmitter and in that the on-board IT station (50) comprises a radio receiver.

15. Equipment according to claim 3, characterised in that the transmission means (100) comprise a telephone modem and in that the on-board IT station (50) comprises an equivalent modem.
